# FASCICULE DE BREVET EUROPEEN

(11) **EP 3 421 750 B1**
(45) Date de publication et mention de la délivrance du brevet: **23.12.2020**
(21) Numéro de dépôt: 18177687.3
(22) Date de dépôt: 14.06.2018
(51) Int. Cl.: F02B 33/40, F02B 37/04, F02B 37/12, F02B 39/10, F02B 37/16, F02M 35/10, F02M 35/104

(54) **MODULE D'ADMISSION D'AIR POUR MOTEUR À COMBUSTION**
LUFTEINLASSMODUL FÜR EINEN VERBRENNUNGSMOTOR
AIR-INTAKE DEVICE FOR A COMBUSTION ENGINE

(30) Priorité: 27.06.2017 FR 1755873
(43) Date de publication de la demande: 02.01.2019
(73) Titulaire: RENAULT s.a.s., 92100 Boulogne-Billancourt (FR)
(72) Inventeur: CHALMETTE, Bruno, 92150 SURESNES (FR); MARCHOT, Guy, 78990 ELANCOURT (FR)

(56) Documents cités:
- EP-A1- 1 305 517
- EP-A1- 3 133 289
- CN-A- 106 677 888
- DE-A1-102014 007 167
- DE-A1-102014 223 891
- DE-A1-102015 004 741
- DE-A1-102015 207 791
- JP-A- 2015 090 111
- US-A- 5 730 586
- US-B2- 6 805 088

## Description

La présente invention concerne un module d'admission d'air pour moteur à combustion. L'invention concerne également un procédé de fonctionnement d'un tel module. L'invention concerne également un groupe motopropulseur comprenant un tel module. Enfin, l'invention concerne un véhicule automobile comprenant un tel groupe motopropulseur ou un tel module.

Des exemples pour modules d'admission d'air pour moteur à combustion sont montrés par DE102014007167 A1, DE102015004741 A1, DE102014223891 A1, DE102015207791 A1, EP1305517 B1, US6805088 B2, JP2015090111 A et US5730586 A.

Un moteur à combustion requiert un comburant pour la combustion d'un carburant. En pratique, un moteur à combustion de véhicule automobile utilise l'air comme comburant. Afin d'augmenter la puissance des moteurs à combustion ou de réduire leur taille, les fabricants cherchent à augmenter la quantité d'air injectée dans les cylindres du moteur. Dans cet objectif, on connaît l'utilisation de turbocompresseurs composés de deux roues coaxiales et liées entre elles. La première roue est une turbine entraînée en rotation par les gaz d'échappement du moteur et entraîne en rotation la deuxième roue. La deuxième roue est un compresseur et augmente le débit d'air en entrée du moteur. Un tel système est particulièrement efficace à haut régime lorsque les gaz d'échappement ont suffisamment de vitesse pour entraîner le turbocompresseur en rotation à une vitesse élevée. Toutefois, de tels turbocompresseurs sont inefficaces à bas régime. De plus, le turbocompresseur étant alimenté par des gaz d'échappement chauds, il réchauffe l'air en entrée du moteur ce qui abaisse sa densité et va à l'encontre de l'effet recherché.

Pour pallier ces difficultés, on connaît l'utilisation d'une part d'un compresseur électrique d'air apte à augmenter le débit d'air en entrée du moteur indépendamment du régime du moteur. D'autre part, on connaît l'utilisation d'un refroidisseur d'air suralimenté permettant d'abaisser la température de l'air en sortie d'un compresseur de turbocompresseur. Différentes conduites d'air et différents papillons des gaz forment différents circuits d'admission d'air qui sont activés en fonction de conditions de fonctionnement du moteur. Ces équipements supplémentaires sont encombrants dans le compartiment moteur et requièrent des moyens de pilotage pour chaque papillon des gaz et pour le compresseur électrique d'air ce qui rend particulièrement complexe l'intégration du système d'admission d'air dans le groupe motopropulseur. De plus, les conduites d'air ont souvent un parcours tortueux ce qui génère un surplus de masse et de volume dans le compartiment moteur ainsi qu'une perte de pression d'air tout au long de ces conduites d'air.

Le but de l'invention est de fournir un module d'admission d'air pour moteur à combustion et un procédé de fonctionnement du module d'admission d'air remédiant aux inconvénients ci-dessus et améliorant les dispositifs et procédés de fonctionnement connus de l'art antérieur. En particulier, l'invention permet de réaliser un module d'admission d'air pour moteur à combustion compact et présentant un encombrement réduit. L'invention permet également de réaliser un module d'admission d'air et un procédé de fonctionnement du module d'admission d'air qui soient aptes à augmenter la puissance du moteur indépendamment du régime du moteur.

L'invention permet également de réaliser un module d'admission d'air pour moteur à combustion compact, léger, et simple à intégrer dans un compartiment moteur et simple à commander.

L'invention se rapporte à un module d'admission d'air pour moteur à combustion selon la revendication 1.

Le module d'admission d'air peut comprendre un système mécatronique muni d'un moteur électrique apte à contrôler l'orientation du premier et du deuxième papillon des gaz.

Le moteur électrique peut être unique.

Le module d'admission d'air peut comprendre une unique connectique apte à alimenter et/ou à transmettre des ordres de commande au système mécatronique et au compresseur électrique d'air.

Le module d'admission d'air peut comprendre une conduite de jonction entre la première conduite d'air et la deuxième conduite d'air en aval du premier et du deuxième papillon des gaz, notamment la conduite de jonction étant rigidement fixée à la première conduite d'air et/ou à la deuxième conduite d'air.

La conduite de jonction peut être formée dans le carter.

La conduite de jonction peut avoir la forme d'une volute.

Le compresseur électrique d'air peut être apte à augmenter la pression de l'air dans la deuxième conduite d'air en aval du deuxième papillon des gaz.

Le compresseur électrique d'air peut être fixé, notamment vissé, sur le carter. Le carter peut comprendre une conduite de refroidissement destinée à refroidir l'air circulant dans le module d'admission d'air.

Un aspect de l'invention se rapporte également à un groupe motopropulseur comprenant un système d'admission d'air comprenant :
- un module d'admission d'air tel que défini précédemment ; et/ou
- un compresseur de turbocompresseur en amont du module d'admission d'air et dont une sortie est reliée par une conduite de raccordement à la première conduite d'air et à la deuxième conduite d'air ; et/ou
- un répartiteur d'admission en aval du module d'admission d'air et dont une entrée est reliée directement au module d'admission d'air ; et/ou
- un unique refroidisseur muni d'un échangeur de type air-eau, notamment un unique refroidisseur intégré au répartiteur d'admission.

Un aspect de l'invention se rapporte aussi à un véhicule automobile comprenant un module d'admission d'air tel que défini précédemment ou un groupe motopropulseur tel que défini précédemment.

Enfin, l'invention se rapporte à un procédé de fonctionnement d'un module d'admission d'air tel que défini précédemment ou d'un groupe motopropulseur tel que défini précédemment ou d'un véhicule automobile tel que défini précédemment, chaque papillon des gaz pouvant être dans une configuration ouverte ou dans une configuration fermée ou dans toute configuration intermédiaire. Le procédé comprend:
- une première phase lors de laquelle le premier papillon des gaz et le deuxième papillon des gaz sont en configuration fermée et le compresseur électrique d'air est inactif ; et/ou
- une deuxième phase lors de laquelle le premier papillon des gaz est en configuration ouverte, le deuxième papillon des gaz est en configuration fermée et le compresseur électrique d'air est inactif ; et/ou
- une troisième phase lors de laquelle le premier papillon des gaz se ferme progressivement tandis que le deuxième papillon des gaz s'ouvre progressivement et le compresseur électrique d'air est actif ; et/ou
- une quatrième phase lors de laquelle le premier papillon des gaz est en configuration fermée, le deuxième papillon des gaz est en configuration ouverte et le compresseur électrique d'air est actif ; et/ou.
- une cinquième phase lors de laquelle le premier papillon des gaz s'ouvre progressivement tandis que le deuxième papillon des gaz se ferme progressivement et le compresseur électrique d'air est actif.

Ces objets, caractéristiques et avantages de la présente invention seront exposés en détail dans la description suivante d'un mode de réalisation particulier fait à titre non-limitatif en relation avec les figures jointes parmi lesquelles :
La figure 1 est une première vue en perspective d'un module d'admission d'air selon un mode de réalisation de l'invention.
La figure 2 est une deuxième vue en perspective du mode de réalisation du module d'admission d'air.
La figure 3 est une vue schématique d'un groupe motopropulseur équipé du mode de réalisation du module d'admission d'air dans une première phase.
La figure 4 est une vue schématique d'un groupe motopropulseur équipé du mode de réalisation du module d'admission d'air dans une deuxième phase.
La figure 5 est une vue schématique d'un groupe motopropulseur équipé du mode de réalisation du module d'admission d'air dans une troisième phase ou dans une cinquième phase.
La figure 6 est une vue schématique d'un groupe motopropulseur équipé du mode de réalisation du module d'admission d'air dans une quatrième phase.

Dans la description qui va suivre les termes « amont » et « aval » font référence au sens de propagation de l'air, l'air se propageant de l'amont vers l'aval.

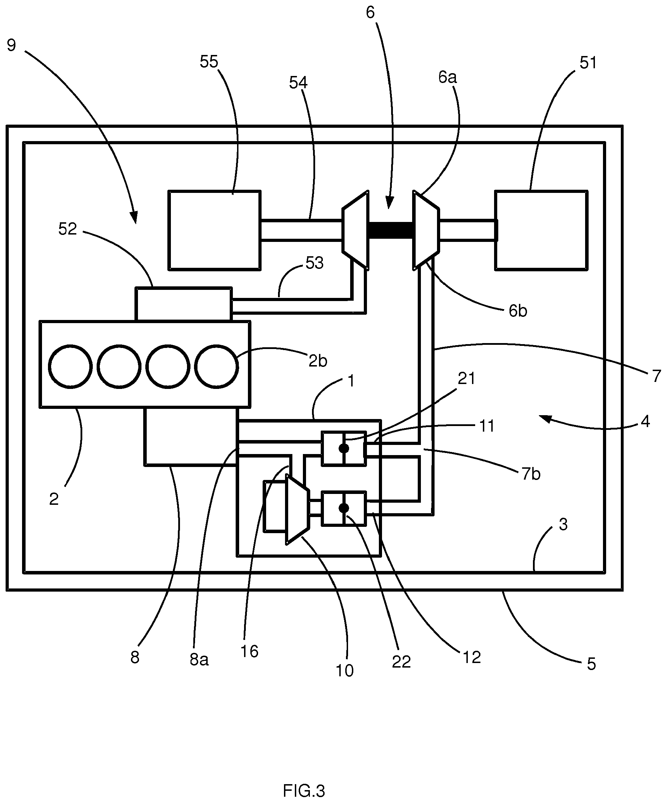

Les figures 3, 4, 5 et 6 illustrent un véhicule automobile 5 comprenant un groupe motopropulseur 3 équipé notamment d'un moteur 2 à combustion, d'un système d'admission d'air 4 et d'un système d'échappement des gaz 9. Le système d'admission d'air 4 est destiné à apporter un comburant, en l'occurrence de l'air, dans des cylindres 2b du moteur en vue de permettre la combustion d'un carburant, par exemple de l'essence ou du gasoil. Le système d'échappement des gaz 9 est destiné à évacuer des gaz issus de la combustion du carburant dans les cylindres 2b vers l'extérieur.

Le système d'admission d'air 4 comprend un module d'admission d'air 1 selon un mode de réalisation, un compresseur 6a de turbocompresseur 6 en amont du module d'admission d'air 1 et un répartiteur d'admission 8 en aval du module d'admission d'air 1. Le système d'admission d'air peut également comprendre un filtre à air 51 en amont du compresseur 6a. Le compresseur 6a du turbocompresseur 6 comprend une première roue liée en rotation à une deuxième roue. La deuxième roue est entraînée en rotation par des gaz d'échappement et la première roue augmente ainsi le débit d'air dans le système d'admission d'air 4. Une sortie 6b du compresseur 6a du turbocompresseur 6 est reliée par une conduite de raccordement 7 au module d'admission d'air 1. La conduite de raccordement 7 peut être une tubulure de forme et de longueur quelconque pouvant avoir, par exemple, une section circulaire. En variante, le système d'admission d'air pourrait ne pas comprendre de turbocompresseur 6. Dans un tel cas, la conduite de raccordement 7 serait directement reliée au filtre à air 51. Selon une autre variante, le système d'admission pourrait comprendre au moins deux turbocompresseurs montés en série ou en parallèle en amont du module d'admission d'air.

Le répartiteur d'admission 8 répartit l'air qu'il reçoit en entrée dans les différents cylindres 2b du moteur 2. Il peut éventuellement comprendre un refroidisseur à échangeur thermique de type air-eau apte à abaisser la température de l'air qui le traverse. Un tel répartiteur d'admission 8 est également parfois dénommé par le terme anglo-saxon « Water CAC » ou « Water Charge Air Cooler ». En variante, le répartiteur d'admission pourrait comprendre un refroidisseur à échangeur thermique de type air-air et/ou l'échangeur thermique pourrait être positionné à l'extérieur du répartiteur d'admission. Une entrée 8a du répartiteur d'admission 8 est reliée directement au module d'admission d'air 1. Par conséquent, le module d'admission d'air 1 est avantageusement positionné contre le répartiteur d'admission 8, éventuellement via l'échangeur thermique du répartiteur d'admission. En d'autres termes, le module d'admission d'air 1 est directement juxtaposé au répartiteur d'admission 8, c'est-à-dire qu'aucune conduite supplémentaire n'est nécessaire pour relier le module d'admission d'air 1 au répartiteur d'admission 8. Ainsi, la sortie 6b du compresseur 6a est reliée au répartiteur d'admission 8 en passant par le module d'admission d'air 1.

Selon une première variante et de manière préférentielle, le module d'admission d'air 1 pourrait être disposé directement contre le compresseur 6a et la conduite de raccordement serait alors positionnée entre le module d'admission d'air 1 et l'entrée 8a du répartiteur d'admission 8. Selon une deuxième variante, le module d'admission d'air 1 pourrait être pourrait être raccordé au compresseur 6a par une première conduite de raccordement et au répartiteur d'admission 8 par une deuxième conduite de raccordement.

Le système d'échappement des gaz 9 peut comprendre un collecteur d'échappement 52 et un dispositif de dépollution 55 tel qu'un filtre à particules. Une troisième conduite de raccordement 53 peut relier le collecteur d'échappement 52 à la deuxième roue du turbocompresseur 6 et une quatrième conduite de raccordement 54 peut relier la deuxième roue du turbocompresseur 6 au dispositif de dépollution 55. Le groupe motopropulseur 3 peut également comprendre un système de recirculation d'une partie des gaz d'échappement dans le système d'admission d'air 4 (non représenté).

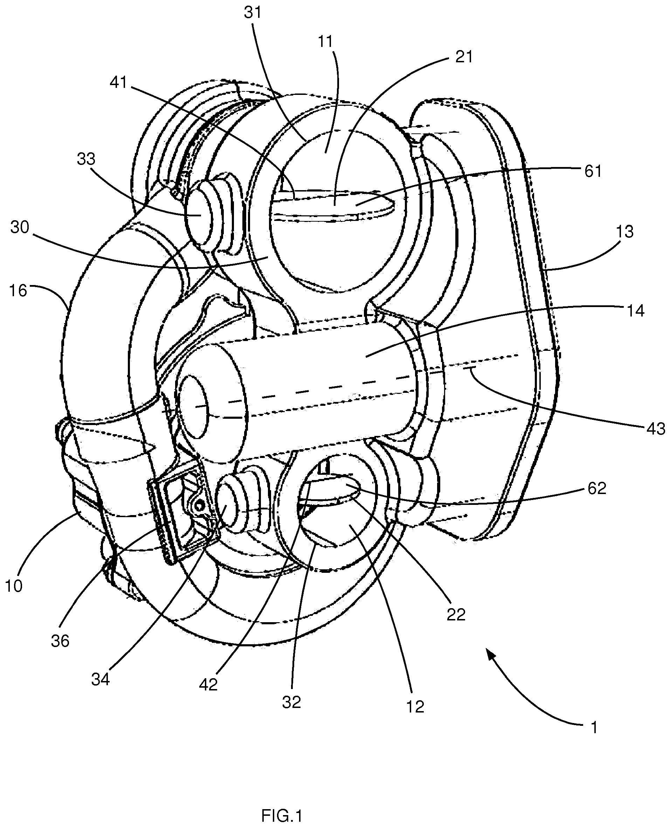

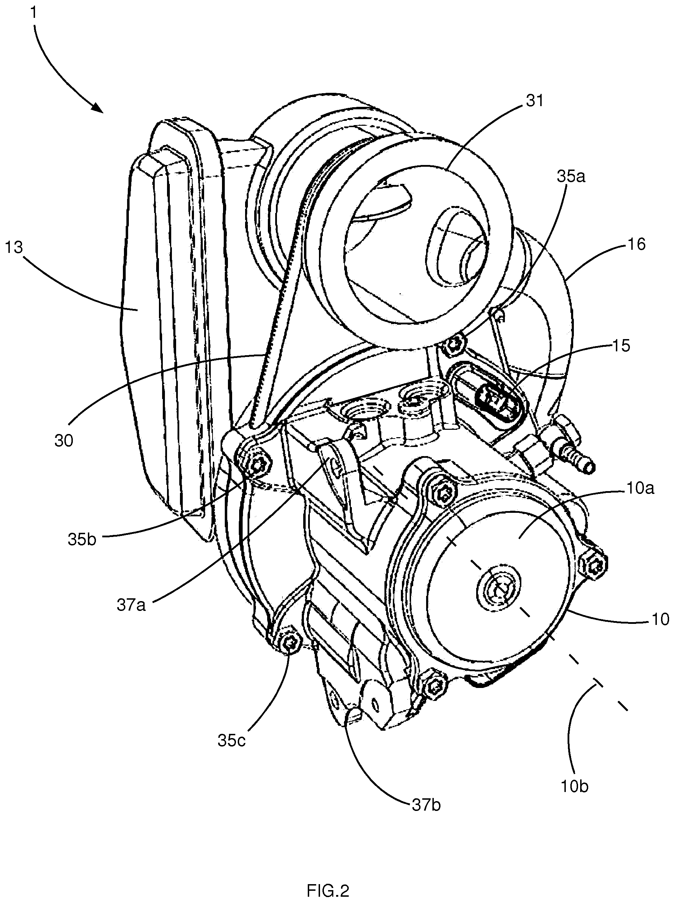

Comme représenté sur les figures 1 et 2, le module d'admission d'air 1 comprend un compresseur électrique d'air 10, une première conduite d'air 11 et une deuxième conduite d'air 12. La première conduite d'air 11 comprend un premier papillon des gaz 21. La deuxième conduite d'air 12 comprend un deuxième papillon des gaz 22. La première et la deuxième conduite d'air 11, 12 comprennent chacune une portion cylindrique 31, 32 dans laquelle est logé le premier papillon des gaz 21 et respectivement le deuxième papillon des gaz 22. On désigne par « axe de la première conduite d'air » ou « axe de la deuxième conduite d'air » l'axe de révolution de la partie cylindrique de la première conduite d'air, ou respectivement de la deuxième conduite d'air. L'axe de la première conduite d'air 11 ou de la deuxième conduite d'air 12 est parallèle à un axe de propagation de l'air au niveau de la portion cylindrique 31, 32. L'axe de la première conduite d'air 11 est sensiblement parallèle à l'axe de la deuxième conduite d'air 12. Le module d'admission d'air 1 comprend une première entrée d'air correspondant à la première conduite d'air 11 et une deuxième entrée d'air correspondant à la deuxième conduite d'air 12. La conduite de raccordement 7 comprend donc une dérivation 7b, par exemple une dérivation en forme de « Y », pour relier la sortie 6b du compresseur 6a au module d'admission d'air 1. En variante, cette dérivation pourrait être intégrée directement au module d'admission d'air 1 et la conduite de raccordement 7 ne comprendrait alors aucune dérivation.

Le premier papillon des gaz 21 est constitué d'un écran 61 et d'un axe 41 traversant la première conduite d'air. L'axe 41 est perpendiculaire à l'axe de la première conduite d'air. L'écran 61 peut pivoter autour de l'axe 41. Dans une première configuration, l'écran 61 est orienté de sorte à obturer la première conduite d'air 11. Dans une deuxième configuration, l'écran 61 est orienté de manière à minimiser sa projection selon l'axe de la première conduite d'air 11. La deuxième configuration est obtenue par une rotation d'un quart de tour de l'écran 61 par rapport à la première configuration. L'écran 61 peut également être incliné selon toute orientation intermédiaire entre la première configuration et la deuxième configuration de sorte que la première conduite d'air 11 peut être progressivement fermée ou progressivement ouverte.

De manière analogue, le deuxième papillon des gaz 22 est constitué d'un écran 62 et d'un axe 42 traversant la deuxième conduite d'air 12. L'axe 42 est perpendiculaire à l'axe de la deuxième conduite d'air. L'écran 62 peut pivoter autour de l'axe 42. Dans une première configuration, l'écran 62 est orienté de sorte à obturer la deuxième conduite d'air 12. Dans une deuxième configuration, l'écran 62 est orienté de manière à minimiser sa projection selon l'axe de la deuxième conduite d'air 12. La deuxième configuration est obtenue par une rotation d'un quart de tour de l'écran 62 par rapport à la première configuration. L'écran 62 peut également être incliné selon toute orientation intermédiaire entre la première configuration et la deuxième configuration de sorte que la deuxième conduite d'air 12 peut être progressivement fermée ou progressivement ouverte. L'axe 41 du premier papillon des gaz 21 est sensiblement parallèle à l'axe 42 du deuxième papillon des gaz 22.

Selon le mode de réalisation présenté, chaque écran 61, 62 a une forme circulaire et coopère avec la portion cylindrique 31, 32 de leur conduite d'air respective. En variante, un écran 61, 62 pourrait avoir toute autre forme et la portion de la conduite d'air coopérant avec cet écran aurait alors un profil adapté à celui de l'écran. Les papillons des gaz 21, 22 servent de vannes d'admission d'air dans le module d'admission d'air 1 et pourraient être remplacés par tout autre type de vanne équivalent.

Le module d'admission d'air 1 comprend un système mécatronique 13 muni d'un moteur électrique 14 apte à contrôler l'orientation du premier et du deuxième papillon des gaz 21, 22. Le moteur électrique 14 est relié à un actionneur apte à modifier simultanément ou séparément l'orientation de l'écran 61, 62 du premier et du deuxième papillon des gaz 21, 22. La proximité des deux papillons des gaz 21, 22 et le parallélisme de leurs axes 41,42 permet avantageusement d'utiliser un même moteur pour le contrôle de l'orientation des deux papillons des gaz 21, 22. En variante, le système mécatronique 13 pourrait comprendre deux moteurs électriques distincts, chaque moteur électrique pilotant un papillon des gaz 21, 22.

Le module d'admission d'air 1 comprend une conduite de jonction 16 entre la première conduite d'air 11 et la deuxième conduite d'air 12 en aval du premier et du deuxième papillon des gaz 21, 22. La conduite de jonction 16 débouche dans la portion cylindrique 31 de la première conduite d'air 11. La conduite de jonction 16 peut déboucher dans la première conduite d'air 11 selon un axe sensiblement perpendiculaire à l'axe de la première conduite d'air 11. La conduite de jonction 16 a la forme d'une volute. La volute est une conduite de section circulaire et présentant une courbure en demi-cercle ou en portion de spirale. Le compresseur électrique d'air 10 est intercalé entre la deuxième conduite d'air 12 et la conduite de jonction 16. Une entrée du compresseur électrique d'air 10 est connectée à la deuxième conduite d'air 12 et une sortie du compresseur électrique d'air 10 est connectée à la conduite de jonction 16. Ainsi, le module d'admission d'air 1 comprend une unique sortie reliée à l'entrée 8a du répartiteur d'admission 8. En variante, le module d'admission d'air 1 pourrait ne pas comprendre de conduite de jonction et comprendre deux sorties distinctes. Une conduite de raccordement annexe comprendrait alors une jonction reliant les deux sorties du module d'admission d'air 1 à l'entrée 8a du répartiteur d'admission 8.

Le compresseur électrique d'air 10 est apte à augmenter la pression de l'air dans la deuxième conduite d'air 12 en aval du deuxième papillon des gaz 22. Le compresseur électrique d'air 10 comprend notamment un moteur électrique 10a et une connectique 15 apte à alimenter le compresseur électrique d'air 10 en énergie et/ou à lui transmettre des ordres de commande. Une unique connectique peut servir à alimenter et à transmettre des ordres de commande au moteur électrique 14 du système mécatronique 13 et au moteur électrique 10a du compresseur électrique d'air 10. Le module d'admission d'air 1 peut être connecté à une unité de commande électronique du groupe motopropulseur par l'intermédiaire de la connectique 15 et/ou éventuellement par l'intermédiaire d'une deuxième connectique.

Le module d'admission d'air 1 comprend un carter 30, notamment un carter monobloc, englobant la portion cylindrique 31 de la première conduite d'air 11 et la portion cylindrique 32 de la deuxième conduite d'air 12. Le carter 30 peut comprendre des protubérances 33, 34 en vis-à-vis de chaque axe 41, 42. Ces protubérances peuvent servir de logement de fixation pour les axes 41, 42. En outre, le carter 30 peut comprendre des interfaces de fixation pour le moteur électrique 10a du compresseur électrique d'air 10, pour le moteur électrique 14 du système mécatronique 13 et pour le système mécatronique 13. Comme particulièrement visible sur la figure 2, le compresseur électrique d'air 10 est vissé sur le carter 30 par l'intermédiaire de vis, notamment d'au moins trois vis de fixation 35a, 35b, 35c. Selon un mode de réalisation préférentiel de l'invention, le carter monobloc peut également comprendre la conduite de jonction 16. Ainsi, la portion cylindrique 31 de la première conduite d'air 11, la portion cylindrique 32 de la deuxième conduite d'air 12 et la conduite de jonction 16 peuvent former un bloc en une seule pièce issue de fonderie. En variante, la conduite de jonction 16 peut être une pièce rapportée, fixée sur le carter à ses deux extrémités ainsi que par l'intermédiaire d'une pièce de fixation 36 comprenant un profil cylindrique épousant la forme de la conduite de jonction 16. Cette pièce de fixation 36 peut être par exemple vissée sur le carter. Ainsi, le module d'admission d'air 1 forme un bloc dans lequel les conduites d'air 11, 12, 16, le système mécatronique 13 et le compresseur électrique d'air 10 sont rigidement fixés entre eux. Le module d'admission d'air 1 peut être fixé au moteur 2 à combustion, au répartiteur d'admission 8, à une caisse du véhicule automobile 5 ou à tout autre élément du véhicule automobile 5 par l'intermédiaire de deux pattes de fixation 37a, 37b ou par tout autre moyen de fixation équivalent.

Selon une autre variante (non représentée), le carter peut comprendre une conduite de refroidissement destinée à refroidir l'air circulant dans le module d'admission d'air 1. La conduite de refroidissement est connectée à un refroidisseur à échangeur thermique de type air-eau ou de type air-air. La conduite de refroidissement peut entourer par exemple la première conduite d'air 11 et la deuxième conduite d'air 12. Préférentiellement, la conduite de refroidissement est intégrée au carter monobloc. La conduite de refroidissement pourrait également être un élément rapporté et fixé sur le carter monobloc. Ainsi, l'encombrement de l'ensemble formé par le module d'admission d'air et le refroidisseur est réduit et l'air est efficacement refroidi.

Le compresseur électrique d'air 10 est orienté de sorte à ce qu'un axe de rotation 10b de son moteur électrique 10a est aligné avec l'axe de la deuxième conduite d'air 12. Le moteur électrique 14 du système mécatronique 13 comprend un axe de rotation 43 sensiblement parallèle à l'axe 41 du premier papillon des gaz 21 et à l'axe 42 du deuxième papillon des gaz 22. Ainsi, l'actionneur du système mécatronique peut comprendre par exemple des engrenages agencés de sorte qu'une rotation du moteur électrique 14 entraîne une rotation de l'axe 41, 42 du premier et/ou du deuxième papillon des gaz 21, 22. En variante, dans l'hypothèse ou l'axe 41 et l'axe 42 ne seraient pas parallèles, l'actionneur du système mécatronique pourrait comprendre un mécanisme plus complexe, par exemple un mécanisme comprenant un joint de transmission ou un renvoi d'angle afin qu'une rotation du moteur électrique 14 entraîne la rotation des axes 41, 42.

L'invention se rapporte également à un procédé de fonctionnement du module d'admission d'air 1 ou du groupe motopropulseur 3 ou du véhicule automobile 5 tels que décrits précédemment. Le procédé de fonctionnement comprend :
- une première phase lors de laquelle le premier papillon des gaz 21 et le deuxième papillon des gaz 22 sont en configuration fermée et le compresseur électrique d'air 10 est inactif ; et/ou
- une deuxième phase lors de laquelle le premier papillon des gaz 21 est en configuration ouverte, le deuxième papillon des gaz 22 est en configuration fermée et le compresseur électrique d'air 10 est inactif ; et/ou
- une troisième phase lors de laquelle le premier papillon des gaz 21 se ferme progressivement tandis que le deuxième papillon des gaz 22 s'ouvre progressivement et le compresseur électrique d'air 10 est actif ; et/ou
- une quatrième phase lors de laquelle le premier papillon des gaz 21 est en configuration fermée, le deuxième papillon des gaz 22 est en configuration ouverte et le compresseur électrique d'air 10 est actif ; et/ou.
- une cinquième phase lors de laquelle le premier papillon des gaz 21 s'ouvre progressivement tandis que le deuxième papillon des gaz 22 se ferme progressivement et le compresseur électrique d'air 10 est actif.

L'unité de commande électronique du groupe motopropulseur 3 peut émettre des ordres de commande à destination du moteur électrique 10a du compresseur électrique d'air 10 et du moteur électrique 14 du système mécatronique 13 de manière à activer l'une des cinq phases décrites ci-dessus.

Lors de la première phase, représentée sur la figure 3, le débit d'air au travers du module d'admission d'air 1 est nul. La combustion dans les cylindres 2b du moteur 2 est impossible. Cette première phase correspond donc à une phase d'arrêt du moteur 2.

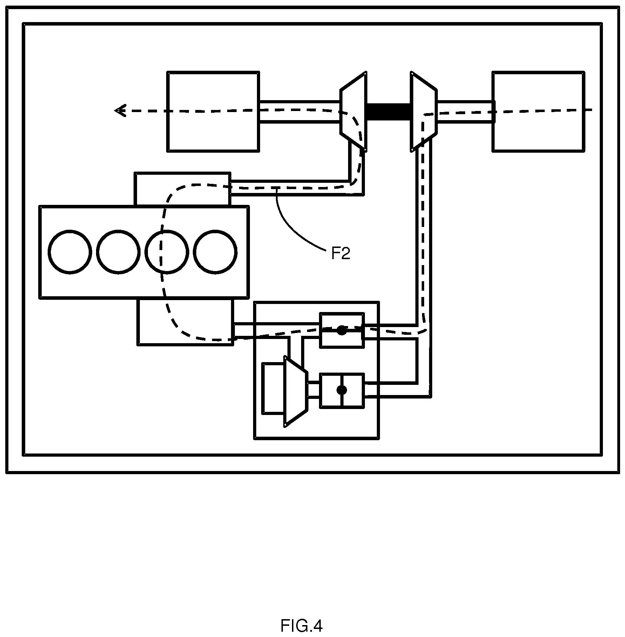

Lors de la deuxième phase, représentée sur la figure 4, l'air peut circuler dans le système d'admission d'air 4 selon un parcours symbolisé par la flèche en pointillés F2. L'air traverse le filtre à air 51, puis le compresseur 6a puis le module d'admission d'air 1 en passant par la première conduite d'air 11 puis enfin le répartiteur d'admission 8 qui répartit l'air dans les différents cylindres 2b du moteur 2. L'air est éventuellement refroidi par le répartiteur d'admission 8 avant de pénétrer dans les cylindres 2b. Après la combustion, l'air est évacué au travers du système d'échappement des gaz 9. Lors de cette deuxième phase, le compresseur 6a peut être indifféremment actif ou inactif.

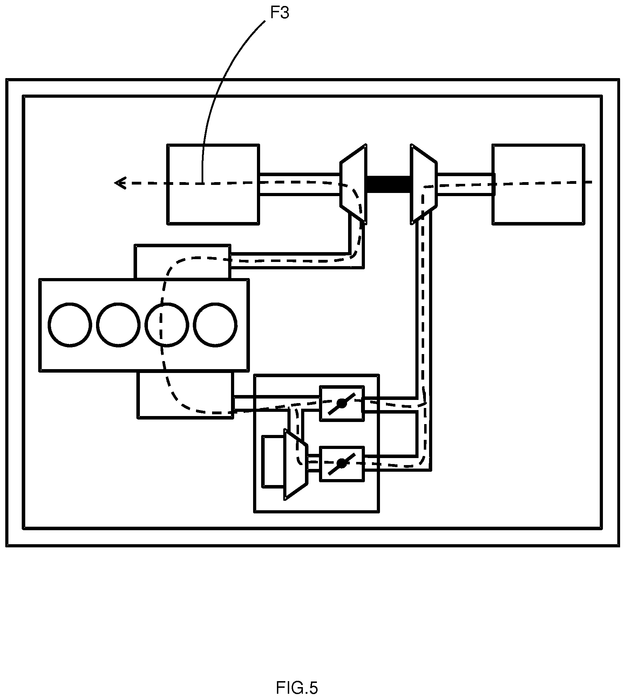

Lors de la troisième phase, représentée sur la figure 5, l'air peut circuler dans le système d'admission d'air 4 selon un parcours symbolisé par la flèche en pointillés F3. L'air traverse le filtre à air 51 puis le compresseur 6a. Le débit d'air au travers de la première conduite d'air 11 en amont du premier papillon des gaz 21 se réduit progressivement à mesure que le premier papillon des gaz se ferme. Dans le même temps, le débit d'air dans la deuxième conduite d'air 12 augmente progressivement à mesure que le deuxième papillon des gaz 22 s'ouvre. Le compresseur électrique d'air 10 aspire l'air dans la deuxième conduite d'air 12 et le refoule dans la conduite de jonction 16. L'air débouche de la conduite de jonction 16 dans la première conduite d'air 11 en aval du premier papillon des gaz 21. L'air rentre alors dans le répartiteur d'admission 8 qui répartit l'air dans les différents cylindres 2b du moteur 2. L'air est éventuellement refroidi par le répartiteur d'admission 8 avant de pénétrer dans les cylindres. Après la combustion, l'air est évacué au travers du système d'échappement des gaz 9. Lors de cette troisième phase, le compresseur 6a peut être indifféremment actif ou inactif.

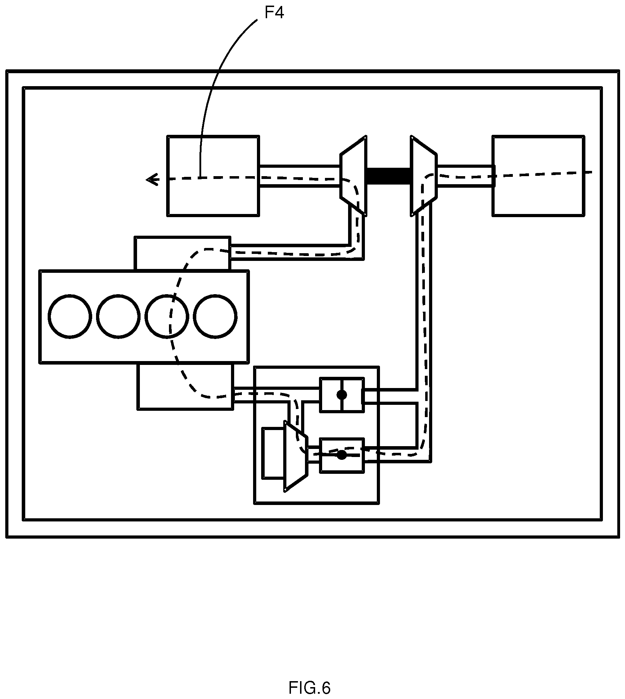

Lors de la quatrième phase, représentée sur la figure 6, l'air peut circuler dans le système d'admission d'air 4 selon un parcours symbolisé par la flèche en pointillés F4. L'air peut circuler dans le système d'admission d'air 4 en traversant le filtre à air 51, puis le compresseur 6a. L'air traverse ensuite la deuxième conduite d'air 12 et est aspiré par le compresseur électrique d'air 10. Le compresseur électrique d'air 10 refoule l'air dans la conduite de jonction 16. L'air débouche de la conduite de jonction 16 dans la première conduite d'air 11 en aval du premier papillon des gaz 21. L'air rentre alors dans le répartiteur d'admission 8 qui répartit l'air dans les différents cylindres du moteur 2. L'air est éventuellement refroidi par le répartiteur d'admission avant de pénétrer dans les cylindres. Après la combustion, l'air est évacué au travers du système d'échappement des gaz 9. Lors de cette quatrième phase, le compresseur 6a peut être indifféremment actif ou inactif.

Lors de la cinquième phase, représentée sur la figure 5, l'air peut circuler dans le système d'admission d'air 4 selon un parcours symbolisé par la flèche en pointillés F3. L'air traverse le filtre à air 51 puis le compresseur 6a. Le débit d'air au travers de la première conduite d'air 11 en amont du premier papillon des gaz 21 augmente progressivement à mesure que le premier papillon des gaz s'ouvre. Dans le même temps, le débit d'air dans la deuxième conduite d'air 12 diminue progressivement à mesure que le deuxième papillon des gaz 22 se ferme. Le compresseur électrique d'air 10 aspire l'air dans la deuxième conduite d'air 12 et le refoule dans la conduite de jonction 16. L'air débouche de la conduite de jonction 16 dans la première conduite d'air 11 en aval du premier papillon des gaz 21. L'air rentre alors dans le répartiteur d'admission 8 qui répartit l'air dans les différents cylindres du moteur 2. L'air est éventuellement refroidi par le répartiteur d'admission 8 avant de pénétrer dans les cylindres 2b. Après la combustion, l'air est évacué au travers du système d'échappement des gaz 9. Lors de cette cinquième phase, le compresseur 6a peut être indifféremment actif ou inactif.

Grâce à l'invention, on dispose d'un module d'admission d'air apte à augmenter le débit d'air dans les cylindres d'un moteur à combustion indépendamment du régime du moteur et notamment à bas régime. Le module d'admission d'air est compact et simple à intégrer dans un système d'admission d'air. L'utilisation d'un tel module d'admission d'air peut requérir l'usage d'une seule conduite de raccordement pour relier le compresseur de turbocompresseur et le compresseur électrique d'air au répartiteur d'admission d'air ce qui offre un gain de poids et d'espace dans un compartiment moteur. Un tel module d'admission d'air peut être utilisé pour tout système nécessitant le vannage de deux flux dont l'un est compressé.

## Revendications

1. Module d'admission d'air (1) pour moteur à combustion (2), qui comprend :
- un compresseur électrique d'air (10),
- une première conduite d'air (11),
- une deuxième conduite d'air (12),
- un premier papillon des gaz (21) apte à modifier le débit d'air dans la première conduite d'air (11),
- un deuxième papillon des gaz (22) apte à modifier le débit d'air dans la deuxième conduite d'air (12),
caractérisé en un carter (30) monobloc issu d'une seule pièce avec la première conduite d'air (11) et la deuxième conduite d'air (12), la première conduite (11) comprenant une première portion cylindrique (31) dans laquelle est logé le premier papillon des gaz (21) et la deuxième conduite (12) comprenant une deuxième portion cylindrique (32) dans laquelle est logé le deuxième papillon des gaz (22).

2. Module d'admission d'air (1) selon la revendication précédente, **caractérisé en ce qu'**il comprend un système mécatronique (13) muni d'un moteur électrique (14) apte à contrôler l'orientation du premier et du deuxième papillon des gaz (21, 22).

3. Module d'admission d'air (1) selon la revendication précédente, caractérisé en ce le moteur électrique (14) est unique.

4. Module d'admission d'air (1) selon l'une des revendications 2 ou 3, **caractérisé en ce qu'**il comprend une unique connectique (15) apte à alimenter et/ou à transmettre des ordres de commande au système mécatronique (13) et au compresseur électrique d'air (10).

5. Module d'admission d'air (1) selon l'une des revendications précédentes, **caractérisé en ce qu'**il comprend une conduite de jonction (16) entre la première conduite d'air (11) et la deuxième conduite (12) d'air en aval du premier et du deuxième papillon des gaz (21, 22), notamment la conduite de jonction (16) étant rigidement fixée à la première conduite d'air (11) et/ou à la deuxième conduite d'air (12).

6. Module d'admission d'air (1) selon la revendication précédente, **caractérisé en ce que** la conduite de jonction (16) est formée dans le carter (30).

7. Module d'admission d'air (1) selon l'une des revendications 5 ou 6, **caractérisé en ce que** la conduite de jonction (16) a la forme d'une volute.

8. Module d'admission d'air (1) selon l'une des revendications précédentes, **caractérisé en ce que** le compresseur électrique d'air (10) est apte à augmenter la pression de l'air dans la deuxième conduite d'air (12) en aval du deuxième papillon des gaz (22).

9. Module d'admission d'air (1) selon l'une des revendications précédentes, **caractérisé en ce que** le compresseur électrique d'air (10) est fixé, notamment vissé, sur le carter (30).

10. Module d'admission d'air (1) selon l'une des revendications précédentes, **caractérisé en ce que** le carter (30) comprend une conduite de refroidissement destinée à refroidir l'air circulant dans le module d'admission d'air (1).

11. Groupe motopropulseur (3) comprenant un système d'admission d'air (4) comprenant un module d'admission d'air (1) selon l'une des revendications 1 à 10.

12. Groupe motopropulseur (3) selon la revendication précédente, **caractérisé en ce que** le système d'admission d'air (4) comprend un répartiteur d'admission (8) en aval du module d'admission d'air (1) et dont une entrée (8a) est reliée directement au module d'admission d'air (1).

13. Véhicule automobile (5) comprenant un module d'admission d'air (1) selon l'une des revendications 1 à 10 ou un groupe motopropulseur (3) selon l'une des revendications 11 à 12.

14. Procédé de fonctionnement d'un module d'admission d'air (1) selon l'une des revendications 1 à 10 ou d'un groupe motopropulseur (3) selon l'une des revendications 11 à 12 ou d'un véhicule automobile selon la revendication 13, **caractérisé en ce que** chaque papillon des gaz (21, 22) peut être dans une configuration ouverte ou dans une configuration fermée ou dans toute configuration intermédiaire, le procédé comprenant :
- une première phase lors de laquelle le premier papillon des gaz (21) et le deuxième papillon des gaz (22) sont en configuration fermée et le compresseur électrique d'air (10) est inactif ; et/ou
- une deuxième phase lors de laquelle le premier papillon des gaz (21) est en configuration ouverte, le deuxième papillon des gaz (22) est en configuration fermée et le compresseur électrique d'air (10) est inactif ; et/ou
- une troisième phase lors de laquelle le premier papillon des gaz (21) se ferme progressivement tandis que le deuxième papillon des gaz (22) s'ouvre progressivement et le compresseur électrique d'air (10) est actif ; et/ou
- une quatrième phase lors de laquelle le premier papillon des gaz (21) est en configuration fermée, le deuxième papillon des gaz (22) est en configuration ouverte et le compresseur électrique d'air (10) est actif ; et/ou.
- une cinquième phase lors de laquelle le premier papillon des gaz (21) s'ouvre progressivement tandis que le deuxième papillon des gaz (22) se ferme progressivement et le compresseur électrique d'air (10) est actif.

## Patentansprüche

1. Lufteinlassmodul (1) für einen Verbrennungsmotor (2), welches umfasst:
- einen elektrischen Luftverdichter (10),
- eine erste Luftleitung (11),
- eine zweite Luftleitung (12),
- eine erste Drosselklappe (21), die geeignet ist, den Luftdurchsatz in der ersten Luftleitung (11) zu ändern,
- eine zweite Drosselklappe (22), die geeignet ist, den Luftdurchsatz in der zweiten Luftleitung (12) zu ändern,
**gekennzeichnet durch**
ein einteiliges Gehäuse (30), das mit der ersten Luftleitung (11) und der zweiten Luftleitung (12) aus einem Stück hergestellt ist,
wobei die erste Leitung (11) einen ersten zylindrischen Abschnitt (31) umfasst, in welchem die erste Drosselklappe (21) untergebracht ist, und die zweite Leitung (12) einen zweiten zylindrischen Abschnitt (32) umfasst, in welchem die zweite Drosselklappe (22) untergebracht ist.

2. Lufteinlassmodul (1) nach dem vorhergehenden Anspruch, **dadurch gekennzeichnet, dass** es ein mit einem Elektromotor (14) ausgestattetes mechatronisches System (13) umfasst, das geeignet ist, die Ausrichtung der ersten und der zweiten Drosselklappe (21, 22) zu steuern.

3. Lufteinlassmodul (1) nach dem vorhergehenden Anspruch, **dadurch gekennzeichnet, dass** der Elektromotor (14) ein einziger ist.

4. Lufteinlassmodul (1) nach einem der Ansprüche 2 oder 3, **dadurch gekennzeichnet, dass** es ein einziges Anschlusselement (15) umfasst, das geeignet ist, das mechatronische System (13) und den elektrischen Luftverdichter (10) mit Strom zu versorgen und/oder Steuerbefehle an sie zu übertragen.

5. Lufteinlassmodul (1) nach einem der vorhergehenden Ansprüche, **dadurch gekennzeichnet, dass** es eine Verbindungsleitung (16) zwischen der ersten Luftleitung (11) und der zweiten Luftleitung (12) stromabwärts der ersten und der zweiten Drosselklappe (21, 22) umfasst, wobei insbesondere die Verbindungsleitung (16) starr an der ersten Luftleitung (11) und/oder an der zweiten Luftleitung (12) befestigt ist.

6. Lufteinlassmodul (1) nach dem vorhergehenden Anspruch, **dadurch gekennzeichnet, dass** die Verbindungsleitung (16) in dem Gehäuse (30) ausgebildet ist.

7. Lufteinlassmodul (1) nach einem der Ansprüche 5 oder 6, **dadurch gekennzeichnet, dass** die Verbindungsleitung (16) die Form einer Spirale hat.

8. Lufteinlassmodul (1) nach einem der vorhergehenden Ansprüche, **dadurch gekennzeichnet, dass** der elektrische Luftverdichter (10) geeignet ist, den Druck der Luft in der zweiten Luftleitung (12) stromabwärts der zweiten Drosselklappe (22) zu erhöhen.

9. Lufteinlassmodul (1) nach einem der vorhergehenden Ansprüche, **dadurch gekennzeichnet, dass** der elektrische Luftverdichter (10) am Gehäuse (30) befestigt, insbesondere angeschraubt ist.

10. Lufteinlassmodul (1) nach einem der vorhergehenden Ansprüche, **dadurch gekennzeichnet, dass** das Gehäuse (30) eine Kühlleitung umfasst, die dazu bestimmt ist, die durch das Lufteinlassmodul (1) strömende Luft zu kühlen.

11. Antriebsstrang (3), welcher ein Lufteinlasssystem (4) umfasst, das ein Lufteinlassmodul (1) nach einem der Ansprüche 1 bis 10 umfasst.

12. Antriebsstrang (3) nach dem vorhergehenden Anspruch, **dadurch gekennzeichnet, dass** das Lufteinlasssystem (4) einen Einlassverteiler (8) stromabwärts des Lufteinlassmoduls (1) umfasst, von dem ein Einlass (8a) direkt mit dem Lufteinlassmodul (1) verbunden ist.

13. Kraftfahrzeug (5), welches ein Lufteinlassmodul (1) nach einem der Ansprüche 1 bis 10 oder einen Antriebsstrang (3) nach einem der Ansprüche 11 bis 12 umfasst.

14. Verfahren zum Betrieb eines Lufteinlassmoduls (1) nach einem der Ansprüche 1 bis 10 oder eines Antriebsstranges (3) nach einem der Ansprüche 11 bis 12 oder eines Kraftfahrzeugs nach Anspruch 13, **dadurch gekennzeichnet, dass** sich jede Drosselklappe (21, 22) in einer geöffneten Konfiguration oder in einer geschlossenen Konfiguration oder in einer Zwischenkonfiguration befinden kann, wobei das Verfahren umfasst:
- eine erste Phase, in welcher sich die erste Drosselklappe (21) und die zweite Drosselklappe (22) in der geschlossenen Konfiguration befinden und der elektrische Luftverdichter (10) inaktiv ist; und/oder
- eine zweite Phase, in welcher sich die erste Drosselklappe (21) in der geöffneten Konfiguration befindet, die zweite Drosselklappe (22) sich in der geschlossenen Konfiguration befindet und der elektrische Luftverdichter (10) inaktiv ist; und/oder
- eine dritte Phase, in welcher sich die erste Drosselklappe (21) allmählich schließt, während sich die zweite Drosselklappe (22) allmählich öffnet und der elektrische Luftverdichter (10) aktiv ist; und/oder
- eine vierte Phase, in welcher sich die erste Drosselklappe (21) in der geschlossenen Konfiguration befindet, die zweite Drosselklappe (22) sich in der offenen Konfiguration befindet und der elektrische Luftverdichter (10) aktiv ist.

## Claims

1. Air-intake module (1) for a combustion engine (2), which comprises:
- an electric air compressor (10),
- a first air duct (11),
- a second air duct (12),
- a first gas butterfly valve (21) that is able to modify the air flow rate in the first air duct (11),
- a second gas butterfly valve (22) that is able to modify the air flow rate in the second air duct (12),
**characterized by**
a one-piece casing (30) formed in one piece with the first air duct (11) and the second air duct (12), the first duct (11) comprising a first cylindrical portion (31) in which the first gas butterfly valve (21) is housed and the second duct (12) comprising a second cylindrical portion (32) in which the second gas butterfly valve (22) is housed.

2. Air-intake module (1) according to the preceding claim, **characterized in that** it comprises a mechatronic system (13) provided with an electric motor (14) that is able to control the orientation of the first and the second gas butterfly valve (21, 22) .

3. Air-intake module (1) according to the preceding claim, **characterized in that** the electric motor (14) is a single electric motor.

4. Air-intake module (1) according to either of Claims 2 and 3, **characterized in that** it comprises a single connector (15) that is able to supply and/or transmit control commands to the mechatronic system (13) and to the electric air compressor (10).

5. Air-intake module (1) according to one of the preceding claims, **characterized in that** it comprises a connecting duct (16) between the first air duct (11) and the second air duct (12) downstream of the first and the second gas butterfly valve (21, 22), in particular the connecting duct (16) being rigidly fixed to the first air duct (11) and/or to the second air duct (12).

6. Air-intake module (1) according to the preceding claim, **characterized in that** the connecting duct (16) is formed in the casing (30).

7. Air-intake module (1) according to either of Claims 5 and 6, **characterized in that** the connecting duct (16) is in the form of a volute.

8. Air-intake module (1) according to one of the preceding claims, **characterized in that** the electric air compressor (10) is able to increase the pressure of the air in the second air duct (12) downstream of the second gas butterfly valve (22).

9. Air-intake module (1) according to one of the preceding claims, **characterized in that** the electric air compressor (10) is fixed, in particular screwed, to the casing (30).

10. Air-intake module (1) according to one of the preceding claims, **characterized in that** the casing (30) comprises a cooling duct intended to cool the air circulating in the air-intake module (1).

11. Propulsion unit (3) comprising an air-intake system (4) comprising an air-intake module (1) according to one of Claims 1 to 10.

12. Propulsion unit (3) according to the preceding claim, **characterized in that** the air-intake system (4) comprises an intake distributor (8) downstream of the air-intake module (1), an inlet (8a) of which is directly connected to the air-intake module (1).

13. Motor vehicle (5) comprising an air-intake module (1) according to one of Claims 1 to 10 or a propulsion unit (3) according to either of Claims 11 and 12.

14. Method for operating an air-intake module (1) according to one of Claims 1 to 10 or a propulsion unit (3) according to either of Claims 11 and 12 or a motor vehicle according to Claim 13, **characterized in that** each gas butterfly valve (21, 22) can be in an open configuration or in a closed configuration or in any intermediate configuration, the method comprising:
- a first phase in which the first gas butterfly valve (21) and the second gas butterfly valve (22) are in the closed configuration and the electric air compressor (10) is inactive; and/or
- a second phase in which the first gas butterfly valve (21) is in the open configuration, the second gas butterfly valve (22) is in the closed configuration and the electric air compressor (10) is inactive; and/or
- a third phase in which the first gas butterfly valve (21) closes gradually while the second gas butterfly valve (22) opens gradually and the electric air compressor (10) is active; and/or
- a fourth phase in which the first gas butterfly valve (21) is in the closed configuration, the second gas butterfly valve (22) is in the open configuration and the electric air compressor (10) is active; and/or
- a fifth phase in which the first gas butterfly valve (21) opens gradually while the second gas butterfly valve (22) closes gradually and the electric air compressor (10) is active.
